Europäisches Patentamt

European Patent Office

Office européen des brevets

(11) Publication number: **0 181 548**
**B1**

# EUROPEAN PATENT SPECIFICATION

(45) Date of publication of patent specification: **07.06.89**

(21) Application number: **85113618.4**

(22) Date of filing: **25.10.85**

(51) Int. Cl.⁴: **F 28 F 9/18,** B 21 C 37/29,
F 16 L 41/02

(54) Manifold and method of manufacturing the same.

(30) Priority: **02.11.84 NO 844355**

(43) Date of publication of application:
**21.05.86 Bulletin 86/21**

(45) Publication of the grant of the patent:
**07.06.89 Bulletin 89/23**

(84) Designated Contracting States:
**AT BE CH DE FR GB IT LI LU NL SE**

(56) References cited:
**EP-A-0 122 392**
**FR-A-1 021 535**
**FR-A-2 508 138**
**FR-B- 71 148**
**GB-A- 857 526**
**GB-A-2 072 291**
**NL-A-8 101 502**

**WERKSATTSTECHNIK. ZEITSCHRIFT FÜR
INDUSTRIELLE FERTIGUNG, vol. 72, no. 8,
August 1982, pages 451-454, Springer-Verlag,
Würzburg, DE; D. BAUER et al.: "Umformarbeit
beim Fliesslochformen"**

(73) Proprietor: **NORSK HYDRO A/S**
**Bygdoy Allé 2**
**N-0257 Oslo 2 (NO)**

(72) Inventor: **Clausen, Edvin List**
**Kogsveien 10**
**DK-6270 Tonder (DK)**

(74) Representative: **WILHELMS, KILIAN & PARTNER**
**Patentanwälte**
**Eduard-Schmid-Strasse 2**
**D-8000 München 90 (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Description

The present invention concerns a manifold of the type stated in the preamble of the patent claim 1 as well as a method for manufacturing the same according to the preamble of the patent claim 4. Such a manifold and method are known from the EP—A—1 22 392.

Starting from this prior art it is the object of the present invention to provide a manifold of the type stated in the preamble of the claim 1 which has a light weight and low manufacturing costs and at the same time ensures a superior leakproof and rigid connection to the branch tubing.

This object is obtained by the construction stated in the characterizing part of the patent claim 1.

Thus, according to the preesnt invention, the protrusion part of the tube is widened around the apertures thus forming fastening flanges surrounding the apertures such that the remaining portions of the protrusion part bridge and stiffen the adjacent flanges. Thereby, a rigid connection of the manifold and the connected branch tubing may be obtained even if thin walled tubes as hollow members are used since the flanges are made by converting the apertures in the protrusion part such that the protrusion part forms the wall of the flanges.

Preferred embodiments of the manifold according to the present invention are subject matter of the patent claims 2 and 3.

The method for manufacturing a manifold according to the present invention comprises the steps stated in the characterizing part of claim 4.

Preferred embodiments of the method accordimg to the present invention are subject matter of the patent claims 5 to 7.

Referring to the accompanying drawings, Figs. 1—5, the invention will be described below in more detail in connection with the examples of manifold embodiment and individual steps of its manufacture.

Fig. 1 shows schematically a section of the manifold

Figs. 2—4 illustrates schematically the individual steps in the manufacturing process, and

Fig. 5 shows as cross-section of the heat exchanger another variant of the manifold design with soldered heat exchanger tubes.

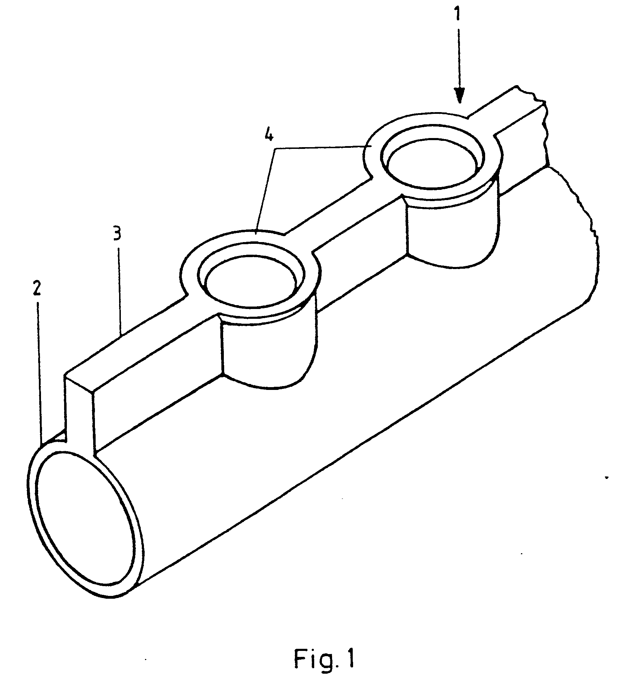

Fig. 1 shows schematically a manifold (1), which according to the invention comprises an extruded, or possibly drawn, hollow body shown in the Figure as shaped tube (2) provided with an integrated, outwards, longitudinally running protrusion part (3). Two of the connection collars or flanges (4) for fastening of heat exchanger tubes to the manifold are depicted in the figure bridged together by means of the protrusion part.

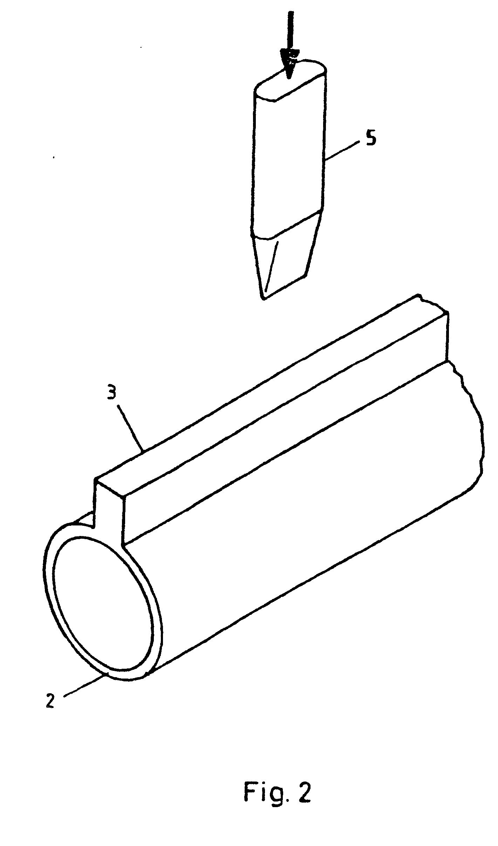

The design of the manifold (1) with connection flanges (4) will now be described in more detail with reference to Figs. 2, 3 and 4.

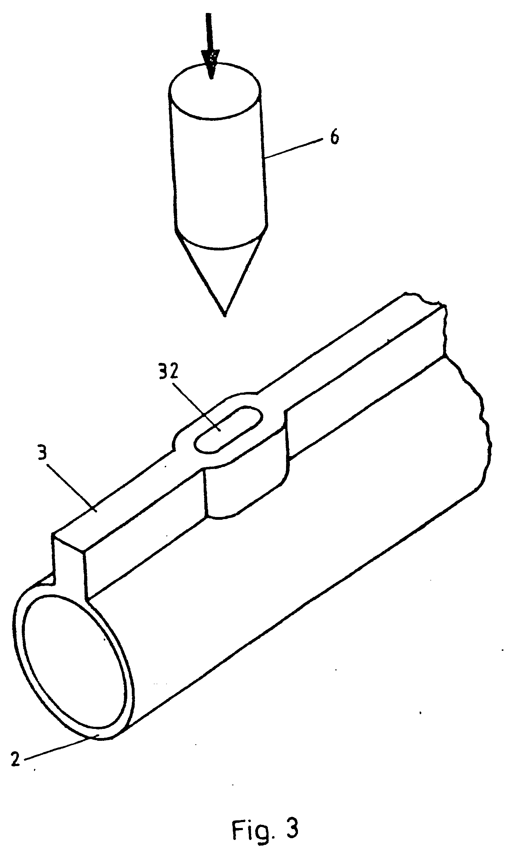

Fig. 2 shows schematially the first step of a process to form the flanges in the outwards running protrusion part (3) on an extruded/drawn shaped tube (2) which by means of a cutting, punching or pressure tool are exposed to a perforating operation. The protrusion part (3) is split or slotted on several predetermined locations with transverse apertures (3) as shown in Fig. 3. These narrow apertures, which lead into the tube's (2) cavity, constitute a basis for the next punching/pressure operation by means of a new tool (6) to reshape the apertures (32) into a connection flange with desired diameter.

As it appears from the drawings, it is the material from the protrusion part itself and not from the shaped tube walls which is applied in forming of the flanges. This gives an opportunity for optimal dimensions of the shaped tube and material saving since the diameter of the flanges can arise up to 5 times the width of the protrusion part, depending on the wall thickness and shape of the final collar.

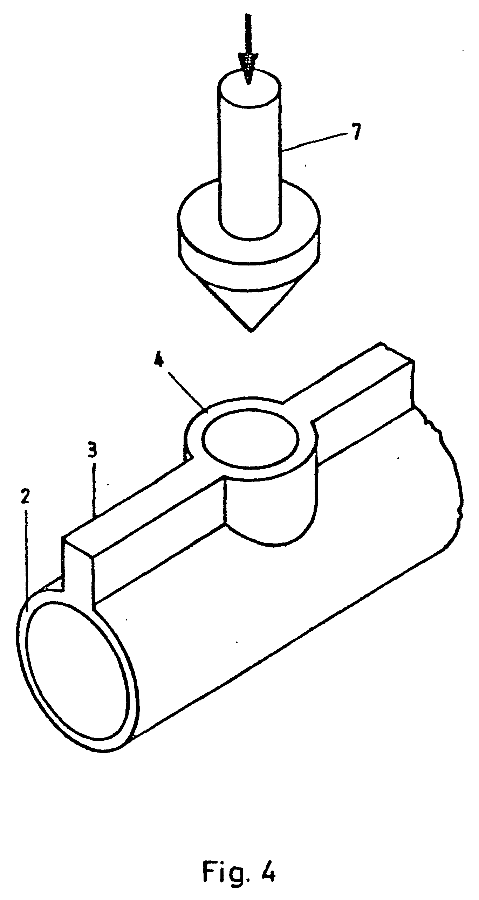

Fig. 4 shows schematically a final pressure operation where by means of a new tool (7) the flange (4) achieves the final shape and diameter, e.g. conically shaped soldar collar on the top of the flange. The number of pressure/punching operation is decided by the final thickness of the flange walls and its shape with possible variation between cylindrical/conical walls and a possible combination of these wall shapes. All steps in this cold deformation process are conducted with an outward support of the shaped tube which ensures a fixed outer shape (not shown in the figures). The applied tools can be designated so that the forming of all flanges on the manifold can be accomplished by one operation per process step.

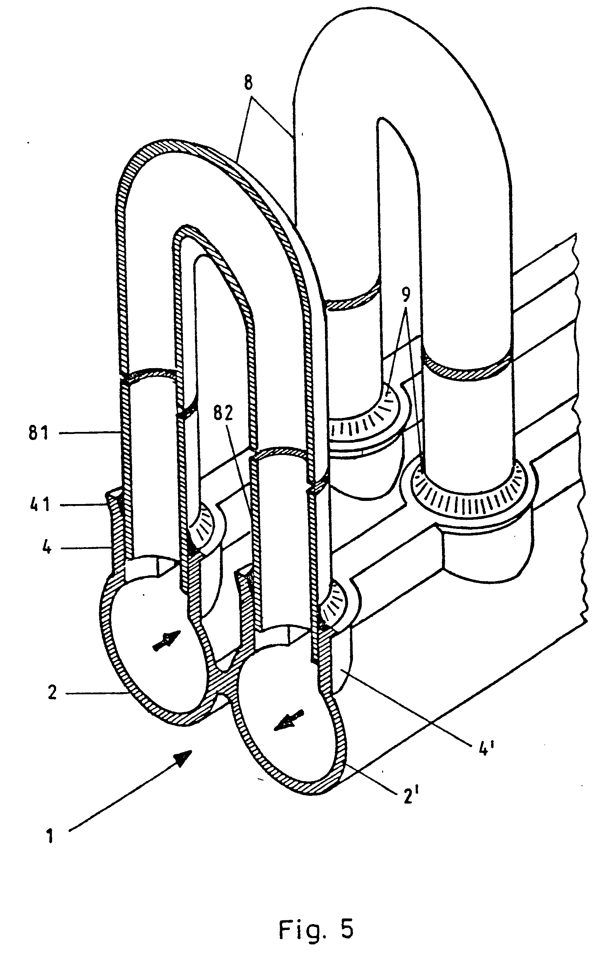

Fig. 5 shows in a vertical cross-section a possible embodiment variant of the manifold according to the invention. The manifold is manufactured as two co-extruded shaped tubes (2,2') constituting respectively a feeding and an outlet tube (pipe) for circulation of cooling medium in a heat exchanger, e.g. in a condenser. The two tubes (2,2') are connected to each other through their respective fastening flanges (4,4') by means of so-called hair pin tubing (8). Two leg portions (81, 82) on the hair pin tubing (8) are after insertion into the flanges (4,4') which give the necessary support and fix the hair pin tubing (8) into the manifold, firmly connected to these (flanges) by soldering shown in the figure as soldering rings (9) in solder collars (41) with conically shaped walls on the top of the flanges. The leg portions (81, 82) are inserted into manifold flanges only to such a depth that they do not represent any reduction of the available cross-section of the tubes (2,2').

As it appears from the above description and the accompanying drawings, a manifold according to the present invention ensures a rigid heat exchanger construction even when extremely thin-walled tubes are applied. This is a result of the two new special features characteristic of the manifold: flexibility with regard to choice of an adequate height of the connection flanges (resting surface for heat exchanger tubes) and a bridging between the individual flanges by the integrated, through-running protrusion part on the shaped tube which acts as stiffener for the adjacent flanges. This feature in combination with the above mentioned maintenance of the free cross-section in the manifold results in optimal dimensions on sturdy, compact heat exchangers and, at the same time, it offers a possibility of inserting partition walls into the manifold in order to influence/regulate the current pattern in the heat exchanger. A further feature of the manufacturing method according to the invention is the gradual exposure to material deformation as a cold deformation which results in increased material strength of the manifold. By a possible overheating during the consequent soldering operation only a sort of (soft) annealing back to the starting point will take place before the deformation and not material weakening as it is experienced from prior art.

## Claims

1. A manifold comprising an elongated hollow member (2) which is an extruded or drawn tube integrally provided with a protrusion part (3) running along said tube and a plurality of spaced apart apertures extending through said protrusion part and said tube for communication with a branch tubing, characterized in that said protrusion part (3) is widened around the apertures in directions outwardly of said apertures and thus forms fastening flanges surrounding the apertures having an outer diameter greater than the thickness of said protrusion.

2. A manifold according to claim 1 characterized in that the tube is an extruded metallic tube and that the outer diameter of the flanges (4) is from 1,5 to 5,0 of the thickness of the protrusion part (3).

3. A manifold according to claim 1 characterized in that the flanges (4) are provided with cylindrical walls terminated on the top by conical shaped collars for connection to the branch tubing.

4. A method for manufacturing a manifold according to claim 1, comprising the steps of providing an elongated hollow member by extruding or drawing a tube with an integral protrusion part running along said tube and perforating said part and said tube with spaced apart apertures, characterized by subjecting the apertures in one or more steps to a cold deformation and thereby widening the protrusion part around the apertures in directions outwardly of said apertures into flanges having an outer diameter greater than the thickness of the protrusion.

5. A method according to claim 4 characterized in that the perforation of the protrusion part is effected by a cutting or punching operation.

6. A method according to claim 4 characterized in that the cold deformation of the apertures is effected by a punching or pressure operation.

7. A method according to one of the claims 4 to 6 characterized in that the fastening flanges are shaped with the conical walls.

## Patentansprüche

1. Verteilerrohr mit einem langgestreckten hohlen Element (2), das ein extrudiertes oder gezogenes Rohr ist, das in einem Stück mit einem vorstehenden Teil (3), der am Rohr entlang verläuft, und einer Vielzahl von beabstandeten, durch den vorstehenden Teil und das Rohr hindurch verlaufenden Öffnungen zum Anschluß an eine Zweigrohrleitung versehen ist, dadurch gekennzeichnet, daß der vorstehende Teil (3) um die Öffnungen in Richtungen von den Öffnungen nach außen erweitert ist und somit Befestigungsflansche bildet, die die Öffnungen umgeben und einen Außendurchmesser haben, der größer als die Stärke des vorstehenden Teils ist.

2. Verteilerrohr nach Anspruch 1, dadurch gekennzeichnet, daß das Rohr ein extrudiertes Metallrohr ist und daß der Außendurchmesser der Flansche (4) das 1,5 bis 5,0-fache der Stärke des vorstehenden Teils (3) ist.

3. Verteilerrohr nach Anspruch 1, dadurch gekennzeichnet, daß die Flansche (4) mit zylindrischen Wänden versehen sind, die am oberen Ende in konisch geformten Kragen zum Anschluß an die Zweigrohrleitung enden.

4. Verfahren zum Herstellen eines Verteilerrohres nach Anspruch 1, welches die Schritte der Bildung eines langgestreckten hohlen Elementes durch Extrudieren oder Ziehen eines Rohres mit einem in einem Stück damit ausgebildeten vorstehenden Teil, der am Rohr entlang verläuft, und das Perforieren dieses Teiles und des Rohres mit beabstandeten Öffnungen umfaßt, dadurch gekennzeichnet, daß die Öffnungen in einem Schritt oder mehreren Schritten einer Kaltverformung unterworfen werden und dadurch der vorstehenden Teil um die Öffnungen herum in Richtungen von den Öffnungen nach außen in Flansche erweitert wird, die einen Außendurchmesser haben, der größer als die Stärke des vorstehenden Teils ist.

5. Verfahren nach Anspruch 4, dadurch gekennzeichnet, daß die Perforation des vorstehenden Teils durch einen Schneid- oder Schlagvorgang bewirkt wird.

6. Verfahren nach Ansruch 4, dadurch gekennzeichnet, daß die Kaltverformung der Öffnungen durch einen Schlag- oder Preßvorgang bewirkt wird.

7. Verfahren nach einem der Ansprüche 4 bis 6, dadurch gekennzeichnet, daß die Befestigungsflansche mit konischen Wänden geformt sind.

## Revendications

1. Collecteur comprenant un organe creux et allongé (2) sous forme d'un tube extrudé ou étiré, ayant une partie (3) en saillie qui en est solidaire et qui est disposée le long du tube, et plusieurs ouvertures espacées traversant la partie en saillie et le tube et destinées à assurer la communication avec un tube en dérivation, caractérisé en ce que la partie en saillie (3) est élargie autour des ouvertures, vers l'extérieur des ouvertures, et forme ainsi des flasques de fixation entourant les ouvertures et ayant un diamètre externe supérieur à l'épaisseur de la saillie.

2. Collecteur selon la revendication 1, caractérisé en ce que le tube est un tube métallique extrudé et en ce que le diamètre externe des flasques (4) est compris entre 1,5 et 5,0 fois l'épaisseur de la partie en sailie (3).

3. Collecteur selon la revendication 1, caractérisé en ce que les flasques (4) ont des parois cylindriques aboutissant à la partie supérieure à des colliers de forme conique permettant le raccordement au tube en dérivation.

4. Procédé de fabrication d'un collecteur selon la revendication 1, comprenant les étapes de réalisation d'un organe creux et allongé par extrusion ou étirage d'un tube avec une partie solidaire en saillie disposée le long du tube, et de perforation de cette partie du tube par des ouvertures espacées, caractérisé en ce qu'il comprend l'application aux ouvertures d'une ou plusieurs étapes de déformation à froid et l'élargissement de cette manière de la partie en saillie autour des ouvertures, vers l'extérieur des ouvertures, sous forme de flasques ayant un diamètre externe supérieur à l'épaisseur de la saillie.

5. Procédé selon la revendication 4, caractérisé en ce que la perforation de la partie en saillie est réalisée par une opération de coupe ou de poinçonnage.

6. Procédé selon la revendications 4, caractérisé en ce que la déformation à froid des ouvertures est réalisée par une opération de poinçonnage ou de déformation sous pression.

7. Procédé selon l'une quelconque des revendications 4 à 6, caractérisé en ce que les flasques de fixation sont délimités par des parois coniques.

Fig. 1

5

3

2

Fig. 2

Fig. 3

Fig. 4

Fig. 5